# EUROPEAN PATENT SPECIFICATION

(11) **EP 1 969 804 B1**
(45) Date of publication and mention of the grant of the patent: **17.10.2018**
(21) Application number: 06820516.0
(22) Date of filing: 13.12.2006
(51) Int. Cl.: H04L 29/06, H04M 7/00

(54) **ROUTING CALLS IN TELECOMMUNICATIONS NETWORKS**
ROUTEN VON ANRUFEN IN TELEKOMMUNIKATIONSNETZEN
ROUTAGE D'APPELS DANS DES RESEAUX DE TELECOMMUNICATION

(30) Priority: 13.12.2005 GB 0525324
(43) Date of publication of application: 17.09.2008
(73) Proprietor: Vodafone Group PLC, Newbury Berkshire RG14 2FN (GB)
(72) Inventor: WONG, Gavin, Surrey KT12 5BP (GB); WARREN, Daniel, Berkshire RG40 3JT (GB)
(74) Representative: Boult Wade Tennant LLP
(86) International application number: PCT/GB2006/004669
(87) International publication number: WO 2007/068927

(56) References cited:
- WO-A-02/103987
- US-A1- 2003 026 245

## Description

### Technical Field

The present invention relates to a method of establishing a telecommunications session in a network having IP multimedia subsystem (IMS) and circuit switched (CS) domains between a first terminal registered with the network and a second terminal. The invention also relates to a system for establishing such a telecommunication session.

### Background to the Invention

The third generation partnership project (3GPP) has recently defined a new concept known as IMS (IP-based Multimedia Subsystem). The aim of IMS is to allow users such as mobile telephone network operators to provide services to their subscribers as efficiently and effectively as possible. For example, the IMS architecture is likely to support the following communication types: voice, video, instant messaging, "presence" (a user's availability for contact), location-based services, email and web. Further communication types are likely to be added in the future.

This diverse collection of communication devices requires efficient session management due to the number of different applications and services that will be developed to support these communication types. The 3GPP have chosen Session Initiation Protocol (SIP) for managing these sessions.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages.

Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefinition is transparent to the end user.
Calls terminating in a cellular or mobile telecommunications network that has both IMS and CS domains cannot easily be routed to the IMS domain if the subscriber they are intended for is IMS registered but CS detached - for example, the subscriber may be attached to the IMS domain by an alternative access method such as xDSL, Ethernet (but not have their CS-based device operating). This problem is particularly evident if the incoming call comes from the traditional circuit switched PSTN.
WO-A-03/001836 and WO-A-02/104057 disclose a telecommunication system for a receiving call in the IMS domain for a user, determining whether the user is registered in the IMS domain (that is, the same domain as the domain in which the call was received), and routing the call in the IMS or CS domain in dependence upon this determination. WO-A2-02/103987 discloses a method of routing a call originating from a CS network and terminating at a packet switched (PS) network, in which the call is initially routed to a PS domain, bypassing a home location register (HLR) query in the CS domain. US2003/0026245 discloses a method for terminating a call request to a mobile unit being served by an interworking mobile switching center (iMSC) in a communication system comprising a CS domain and an IMS.

### Summary of the Invention

According to a first aspect of the present invention, there is provided a method, according to independent claim 1, of establishing a telecommunications session in a network having IP multimedia subsystem (IMS) and circuit switched (CS) domains between a first terminal registered with the network and a second terminal, including the steps of receiving at the network a message in the circuit switched domain for initiating a session with the first terminal; determining at the network whether the first terminal is available to establish an IP multimedia subsystem session; and, establishing an IP multimedia subsystem session or a CS session between the first terminal and the second terminal in dependence thereon.
In the embodiments a Network Domain Selection Function (NDSF) is added to the gateway "call handling cluster", which also includes a gateway MSC and MGCF. The HLR/HSS of the network is adapted to provide IMS subscription and service information to the NDSF on request in the form of a SEND_ROUTING_INFORMATION response. This allows the gateway call handling cluster to forward the call to the IMS domain if the subscriber is registered with, or uses services provided by, the IMS domain but not in the CS domain. Advantageously, this may allow a higher rate of successful call termination, and provides the facility to determine policy about in which domain the call terminates if the subscriber is simultaneously CS and IMS attached.
In the embodiments the received call for a user in the CS domain. It is then determined whether the user is registered in the IMS domain (that is, the domain different to the domain in which the call was received). The call is routed in the IMS or CS domain in dependence upon this determination.

According to a second aspect of the present invention, there is provided a system, according to independent claim 9, for establishing a telecommunications session in a network having IP Multimedia Subsystem (IMS) and circuit switched (CS) domains between a first terminal registered with the network and a second terminal, comprising a network component adapted to receive a message from the second terminal in the CS domain for initiating a session with the first terminal, the network component being adapted to determine from said message whether the first terminal is available to establish an IMS session; and, the network component being operable to establish an IMS session or a CS session between the first terminal and the second terminal in dependence thereon.

Further embodiments are set out in the dependent claims.

### Brief Description of the Drawings

For a better understanding of the present invention, embodiments will now be described with reference to the accompanying drawings, in which:
Figure 1 shows the elements of a network in accordance with an embodiment of the invention, including IMS domain and CS domains;
Figure 2 shows a flow chart of the steps performed when an incoming call in the CS domain is received according to a first embodiment of the invention;
Figure 3 shows the messages exchanged between elements of the network when the steps of the flow chart of Figure 2 are performed; and
Figure 4 corresponds to the flow chart of Figure 2 but modified according to a second embodiment of the invention.

In the drawings like elements are generally designated with the same reference numeral.

### Detailed Description of Embodiments of the Invention

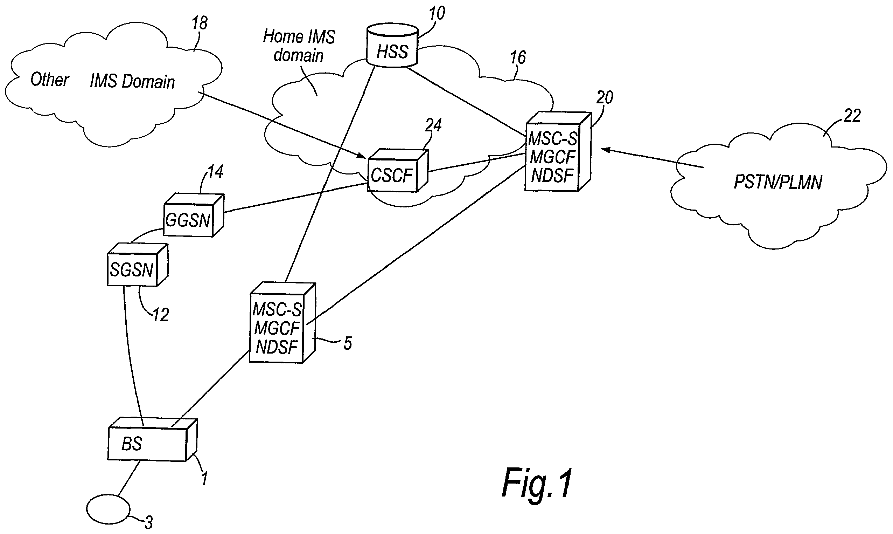

Key elements of a mobile telecommunications network, and its operation, will now briefly be described with reference to Figure 1.
Each base station (BS) 1 corresponds to a respective cell of its cellular or mobile telecommunications network and receives calls from and transmits calls to a mobile terminal 3 in that cell by wireless radio communication in one or both of the circuit switched or packet switched domains. The mobile terminal 3 may be a handheld mobile telephone, a personal digital assistance (PDA) or a laptop computer equipped with a datacard.

In a GSM mobile telecommunications network, each base station comprises a base transceiver station (BTS) and a base station controller (BSC). A BSC may control more than one BTS. The BTSs and BSCs comprise the radio access network.

In a UMTS mobile telecommunications network, each base station comprises a node B and a radio network controller (RNC). An RNC may control more than one node B. The node B's and RNC's comprise the radio access network.

Conventionally, the base stations are arranged in groups and each group of base stations is controlled by one mobile switching centre (MSC) 5. In practice, the network will incorporate many more MSCs and base stations than shown in Figure 1.

Each subscriber to the network is provided with a smart card or SIM which, when associated with the user's mobile terminal identifies the subscriber to the network. The SIM card is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN.

The network includes a home location register (HLR)/home subscriber server (HSS) 10 which, for each subscriber to the network, stores the IMSI and the corresponding MSISDN together with other subscriber data, such as the current or last known location of the subscriber's mobile terminal. The HSS is the master database for the network, and while logically it is viewed as one entity, in practice it will be made up of several physical databases. The HSS holds variables and identities for the support, establishment and maintenance of calls and sessions made by subscribers. As well as the basic HLR/authentication functions, the HSS may be enhanced through the use of additional databases and reference points. This enables the network to offer the subscriber advanced services and features by interfacing with service application servers based on CAMEL, OSA (Open Service Access) and SIP.

The MSC 5 supports communications in the circuit switched (CS) domain - typically voice calls. Corresponding SGSN 12 is provided to support communications in the packet switched (PS) domain, including the IMS domain. The network is provided with a Gateway GPRS Support Node (GGSN) 14 to support IP-based communications with other entities, such as the home IMS domain 16 and the other IMS domain 18.

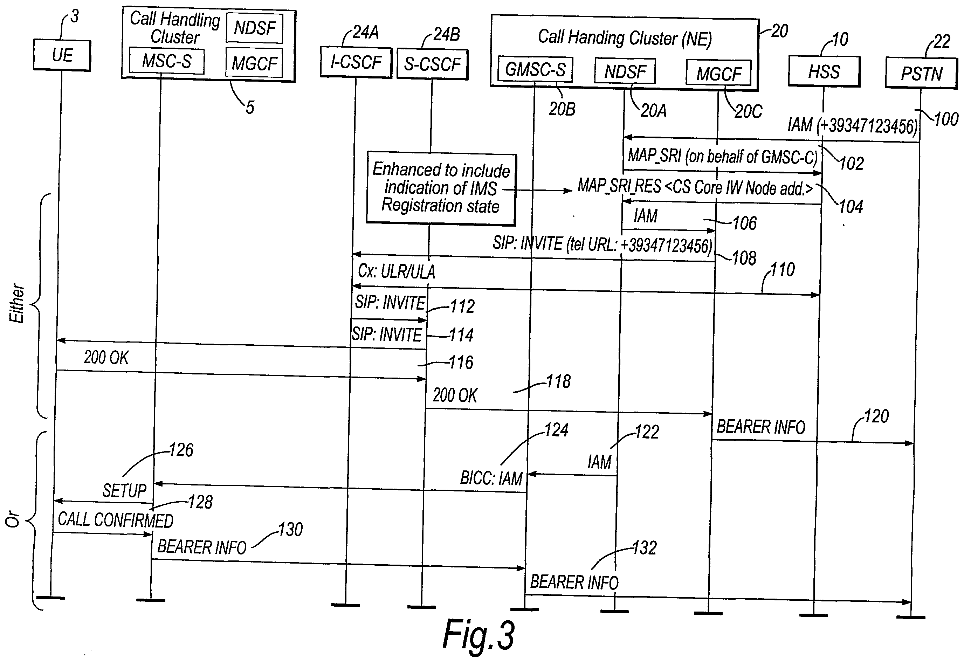

A further MSC (20B, Figure 3) is provided at the network edge in Call Handling Cluster (CHC) 20 for receiving communications from PSTN/PLMN 22. The CHC 20 also comprises a as Media Gateway Control Function (MGCF) - 20C, Figure 3 - which performs the equivalent function of the MSC 20B but in the IMS domain. The CHC 20 acts as the gateway MSC for calls from the PSTN/PLMN 22 that are received in the CS domain, and as a MGCF for calls from the PSTN/PLMN 22 that are handled in the home IMS domain 16.

Calls routed in the CS domain are passed from MSC 20B to MSC 5, and from there to terminal 3 via BS 1. Calls routed in the IMS domain are routed from MGCF 20C to Call Session Control Function (CSCF) 24, and from there to terminal 1 via GGSN 14, SGSN 12 and BS 1. The CSCF 24 comprises Interrogating-CSCF (I-CSCF) 24A and Serving-CSCF (S-CSCF) 24B - see Figure 3.

According to an important feature of the embodiments, the CHC 20 is modified to include a Network Domain Selection Function (NDSF) - 20A, Figure 3. Also, the HLR/HSS 10 is modified to store, and make available for each subscriber, data indicative of the IMS registration state of that subscriber and/or IMS services available to the subscriber, such as IMS voice mail services and call forwarding services (such services may be available to devices that are not IMS registered).

There are two states in IMS: "IMS Registered" and "IMS Deregistered". To move from "IMS Deregistered" to "IMS Registered" a user has to perform registration which involves the sending of a SIP REGISTER message identifying the profile which the user wishes to register. Subsequent to that the user is authenticated. To move from "IMS Registered" to "IMS Deregistered", there are two options: ecplicit deregistration using another SIP REGISTER message with the expires header set to 0, or the registration is not refreshed and as a result implicitly done with no signaling.

The supplementary service set (for example voicemail) that is applicable may be different when a user is registered or deregistered. Take the example of voice calls, when the user is registered one only wants to forward an incoming call to voice mail if the call is not answered or the user is busy, but in the deregistered state, all calls should be forwarded to voice mail since the user is not contactable (in IMS).

The IMS registration status of each user and/or the IMS services provided to each user are stored in the HSS/HLR 10.

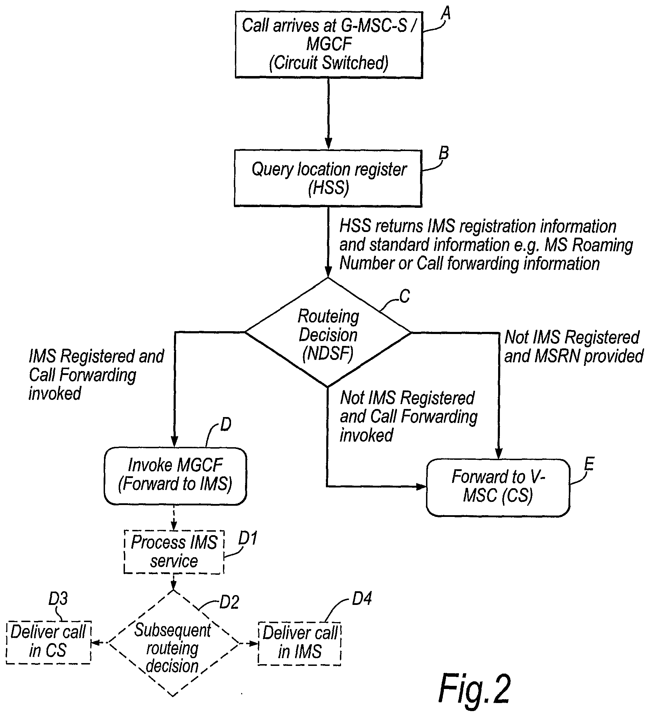

A first embodiment of the invention will now be described in more detail with reference to the flow chart of Figure 2 and the message flow diagram of Figure 3.

At **step A** message 100 is received by the network edge call handling cluster 20 from the PSTN/PLMN 22. This call is in the circuit switched domain. The message is an Initial Access Message (IAM), for example including +39347123456. The message 100 is routed to the NDSF 20A of the call handling cluster 20.

At **step B** the NDSF 20A generates on behalf of the gateway MSC 20B a Mobile Application Part Send Routing Information (MAP_SRI) message 102 and sends this to the HLR/HSS 10.

The HLR/HSS 10 replies with a MAP_SRI response (MAP_SRI_RES) message 104, including value "CS core IW Node add" and an indication of whether a subscriber to which the call is directed is IMS registered. The message 104 may also include standard information of the terminal 3 such as the Mobile Station Roaming Number - MSRN (an E.164 defined telephone number used to route telephone calls in a mobile network from MSC 20B to target MSC 5) - or call forwarding information. Importantly, the MAP_SRI_RES message 104 is enhanced to include an indication of whether the subscriber is IMS registered.

At **step C**, on receipt of the MAP_SRI_RES message 104, the NDSF 20A decides whether the call should be handled in the IMS or CS domain based on information in the message 104.

If the recipient of the call is IMS registered and the IMS domain is to be used, the IAM is forwarded from NDSF 20A to the MGCF 20C - **step D** - in message 106. The MGCF 20C translates the IAM message 106 into a SIP INVITE message which is forwarded to the Interrogating CSCF (I-CSCF) 24A. The call is then handled as a conventional IMS call, with messages 110, 112, 114, 116,118 and 120 being transmitted between the elements of the network as indicated in Figure 3.

At **step D1**, IMS services are processed. At **step D2** a decision is made whether to deliver the call in the circuit switched domain - **step D3** - or in the IMS domain - **step D4**. Steps D1 to D4 are shown by way of example, and do not form part of the invention.

However, if, at step C, it is determined that terminal 3 is not IMS registered and the MSRN is provided, the IAM is forwarded from NDSF 20A to MSC 20B in message 122. The IAM is then forwarded to the serving MSC 5 in message 124 "BICC: IAM" - **step E** - based on the MAP_SRI_RES. The call handling is then as in R4 BICN.

Step E is also performed if it is decided at step C that the terminal 3 is not IMS registered and that call forwarding is invoked.

The call is then established in the CS domain in the conventional manner by the exchange of messages 126,128,130 and 132 between the elements of the network as shown in Figure 3.

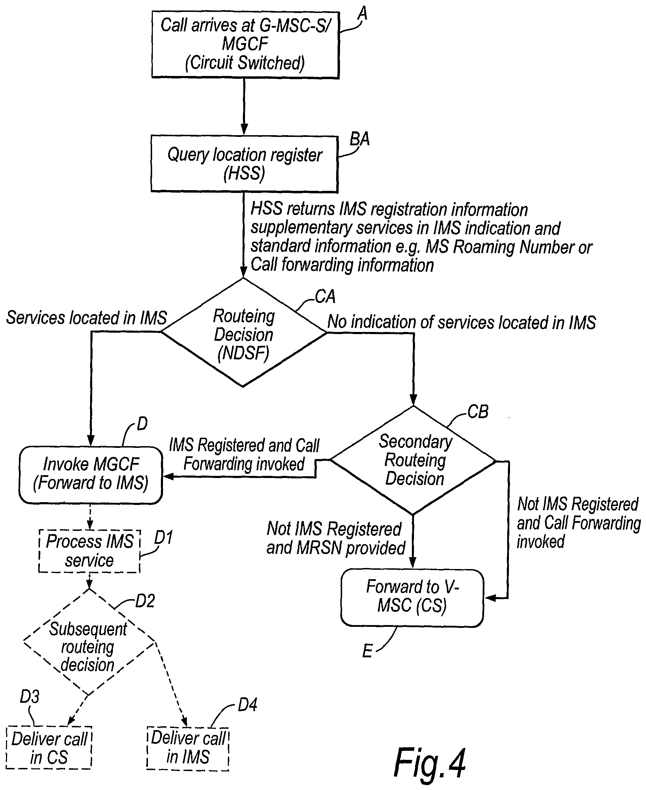

Figure 4 shows the flow chart of a second embodiment of the invention. **Step A** is the same as step A of the Figure 2 embodiment. Step B is modified to new **step BA**. At step BA, in addition to the HLR/HSS 10 returning the IMS registration information and standard information such as MSRN of the terminal 3 or call forwarding information, the HLR/HSS 10 also returns a supplementary services in IMS indication.

At modified **step CA**, on receipt of the MAP_SRI_RES message 104, the NDSF 20A decides whether the terminal 3 is provided with services by IMS based on information in the message 104.

If it is determined at step CA that the subscriber uses services located in the IMS domain, **Steps D,D1,D2,D3 and D4** are performed, which are the same as the Figure 2 embodiment.

However, the additional secondary routing decision **step CB** is made when it is determined at step CA that the HLR/HSS 10 has provided in message 104 with no indication of services located in the IMS domain. At step CB, if it is determined that the terminal 3 is not IMS registered and MSRN provided, then **step E** is performed and the call is forwarded to the circuit switched domain. Similarly, if it is determined at step CB that the terminal 3 is not IMS registered and call forwarding is invoked, step E is performed also.

At step CB if it is determined that the recipient of the call is IMS registered, steps D1,D2,D3 and D4 are performed. Thus, it can be seen that in the second embodiment a first decision is made (at the CA) to determine if IMS services are provided to the call recipient and a second decision is made (at step CB) to determine if the call recipient is IMS registered.

When a subscriber has no availability, routing of messages for storage to a voice mail server is performed via the CS domain, but voice mail messages may be retrievable via either the CS or IMS domains.

Although only on CHC is shown in the embodiments, a plurality may be provided.

## Claims

1. A method of establishing a telecommunications session in a network having Internet Protocol, IP, Multimedia Subsystem, IMS, and circuit switched, CS, domains between a first terminal (3) registered with the network and a second terminal, including the steps of:
receiving (A) at the network an Initial Access Message, IAM, (100) from the second terminal in the CS domain (22) for initiating a session with the first terminal (3);
**characterized in that** the method includes:
receiving at the network
(B, BA) a response message (104) from a home location register , HLR, or a home subscriber server, HSS,
(10), the response message (104)
including data indicative of the IMS registration state of the first terminal (3), the data being stored on the HLR or the HSS (10);
determining (C, CA) at the network, based on said response message,
whether the first terminal (3) is available to establish an IMS session; and
establishing an IMS session or a CS session between the first terminal (3) and the second terminal in dependence thereon.

2. The method according to claim 1, wherein, if the network determines that the first terminal (3) is available to establish an IMS session and not available in the CS domain, the session is established through the IMS domain.

3. The method according to one of claims 1 and 2, wherein, if the network determines that the first terminal (3) is not available in the IMS domain, the session is established through the CS domain.

4. The method according to any one of the preceding claims, wherein the second terminal sends the IAM (100) to the network via a, Public Switched Telephone Network, PSTN, network (22).

5. The method according to any one of the preceding claims, wherein, if a CS session is to be established, the session is established over a node with Mobile Switching Centre functionality.

6. The method according to any one of the preceding claims, wherein, if an IMS session is to be established, the session is established over a node with Service General Packet Radio Service, GPRS, Support Node functionality.

7. The method according to any one of the preceding claims, wherein the first terminal (3) is a voice mail recording server or a call forwarding server.

8. The method according to any one of the preceding claims, wherein the HLR or the HSS (10) is adapted to provide IMS service data of the first terminal (3).

9. A system for establishing a telecommunications session in a network having Internet Protocol, IP, Multimedia Subsystem, IMS, and circuit switched, CS, domains between a
first terminal (3) registered with the network and a second terminal, comprising a network component (20)
adapted to receive an Initial Access Message, IAM, (100) from the second terminal in the CS domain (22) for initiating a session with the first terminal (3),
the system further comprising a home location register , HLR, or a home subscriber server, HSS, in which data indicative of the IMS registration state of the first terminal is stored,
the system **characterized in that**
the HLR or the HSS is adapted to provide a response message to the network component, the response message including data indicative of the IMS registration state of the first terminal,
the network component (20) being adapted to obtain the response message from the HLR or the HSS and to determine from said response message whether the first terminal (3) is available to establish an IMS session; and the network component (20) being operable to establish an IMS session or a CS session between the first terminal (3) and the second terminal in dependence thereon.

10. The system according to claim 9, wherein, if the network determines that the first terminal (3) is available to establish an IMS session and not available in the CS domain, the session is established through the IMS domain.

11. The system according to one of claims 9 and 10, wherein, if the network determines that the first terminal (3) is not available in the IMS domain, the session is established through the CS domain.

12. The system according to any one of claims 9 to 11, wherein the second terminal sends the IAM (100) to the network via a, Public Switched Telephone Network, PSTN, network (22).

13. The system according to any one of claims 9 to 12, wherein, if a CS session is to be established, the session is established over a node with Mobile Switching Centre functionality.

14. The system according to any one of claims 9 to 13, wherein, if an IMS session is to be established, the session is established over a node with Service General Packet Radio Service, GPRS, Support Node functionality.

15. The system according to any one of claims 9 to 14, wherein the first terminal (3) is a voice mail recording server or a call forwarding server.

16. The system according to any one of claims 9 to 15, wherein the HLR or the HSS (10) is adapted to provide IMS service data of the first terminal (3).

## Patentansprüche

1. Verfahren zum Aufbauen einer Telekommunikationssitzung in einem Netz mit Internetprotokoll(IP)-Multimedia-Subsystem(IMS)- und leitungsvermittelter (Circuit Switched, CS) Domäne zwischen einem ersten Endgerät (3), das im Netz registriert ist, und einem zweiten Endgerät, das die folgenden Schritte umfasst:
Empfangen (A) am Netz einer Erstzugriffsnachricht (Initial Access Message, IAM) (100) vom zweiten Endgerät in der CS-Domäne (22) zum Einleiten einer Sitzung mit dem ersten Endgerät (3);
**dadurch gekennzeichnet, dass** das Verfahren Folgendes umfasst
Empfangen am Netz (B, BA) einer Antwortnachricht (104) von einem Heimatortsregister (Home Location Register, HLR) oder einem Heimatteilnehmerserver (Home Subscriber Server, HSS) (10), wobei die Antwortnachricht (104) Daten umfasst, die für den IMS-Registrierungsstatus des ersten Endgeräts (3) indikativ sind, wobei die Daten im HLR oder im HSS (10) gespeichert werden;
Bestimmen (C, CA) am Netz, basierend auf der Antwortnachricht, ob das erste Endgerät (3) verfügbar ist, um eine IMS-Sitzung aufzubauen; und
Aufbauen einer IMS-Sitzung oder einer CS-Sitzung zwischen dem ersten Endgerät (3) und dem zweiten Endgerät in Abhängigkeit davon.

2. Verfahren gemäß Anspruch 1, wobei, falls das Netz bestimmt, dass das erste Endgerät (3) verfügbar ist, um eine IMS-Sitzung aufzubauen, und in der CS-Domäne nicht verfügbar ist, die Sitzung durch die IMS-Domäne aufgebaut wird.

3. Verfahren gemäß einem der Ansprüche 1 und 2, wobei, falls das Netz bestimmt, dass das erste Endgerät (3) in der IMS-Domäne nicht verfügbar ist, die Sitzung durch die CS-Domäne aufgebaut wird.

4. Verfahren gemäß einem der vorhergehenden Ansprüche, wobei das zweite Endgerät die IAM (100) über ein öffentliches Telefonnetz (PSTN, Public Switched Telephone Network) (22) sendet.

5. Verfahren gemäß einem der vorhergehenden Ansprüche, wobei, falls eine CS-Sitzung aufgebaut werden soll, die Sitzung über einen Knoten mit der Funktionalität einer Mobilfunk-Vermittlungsstelle aufgebaut wird.

6. Verfahren gemäß einem der vorhergehenden Ansprüche, wobei, falls eine IMS-Sitzung aufgebaut werden soll, die Sitzung über einen Knoten mit der Funktionalität eines dienenden GPRS-Trägerknotens (GPRS = General Packet Radio Service, allgemeiner paketorientierter Funkdienst) aufgebaut wird.

7. Verfahren gemäß einem der vorhergehenden Ansprüche, wobei das erste Endgerät (3) ein Voicemailaufzeichnungsserver oder ein Anrufweiterleitungsserver ist.

8. Verfahren gemäß einem der vorhergehenden Ansprüche, wobei das HLR oder der HSS (10) angepasst ist, um IMS-Dienstdaten des ersten Endgeräts (3) bereitzustellen.

9. System zum Aufbauen einer Telekommunikationssitzung in einem Netz mit Internetprotokoll(IP)-Multimedia-Subsystem(IMS)- und leitungsvermittelter (CS) Domäne zwischen einem ersten Endgerät (3), das im Netz registriert ist, und einem zweiten Endgerät, das eine Netzkomponente (20) beinhaltet, die angepasst ist, um eine Erstzugriffsnachricht (IAM) (100) vom zweiten Endgerät in der CS-Domäne (22) zum Einleiten einer Sitzung mit dem ersten Endgerät (3) zu empfangen;
wobei das System ferner ein Heimatortsregister (HLR) oder einen Heimatteilnehmerserver (HSS) beinhaltet, in dem Daten gespeichert werden, die für den IMS-Registrierungsstatus des ersten Endgeräts indikativ sind,
wobei das System **dadurch gekennzeichnet ist, dass**
das HLR oder der HSS angepasst ist, um der Netzkomponente eine Antwortnachricht bereitzustellen, wobei die Antwortnachricht Daten umfasst, die für den IMS-Registrierungsstatus des ersten Endgeräts indikativ sind,
die Netzkomponente (20) angepasst ist, um die Antwortnachricht vom HLR oder vom HSS zu erhalten und nach der Antwortnachricht zu bestimmen, ob das erste Endgerät (3) verfügbar ist, um eine IMS-Sitzung aufzubauen; und die Netzkomponente (20) betriebsfähig ist, um eine IMS-Sitzung oder eine CS-Sitzung zwischen dem ersten Endgerät (3) und dem zweiten Endgerät in Abhängigkeit davon aufzubauen.

10. System gemäß Anspruch 9, wobei, falls das Netz bestimmt, dass das erste Endgerät (3) verfügbar ist, um eine IMS-Sitzung aufzubauen, und in der CS-Domäne nicht verfügbar ist, die Sitzung durch die IMS-Domäne aufgebaut wird.

11. System gemäß einem der Ansprüche 9 und 10, wobei, falls das Netz bestimmt, dass das erste Endgerät (3) in der IMS-Domäne nicht verfügbar ist, die Sitzung durch die CS-Domäne aufgebaut wird.

12. System gemäß einem der Ansprüche 9 bis 11, wobei das zweite Endgerät die IAM (100) über ein öffentliches Telefonnetz (PSTN) (22) sendet.

13. System gemäß einem der Ansprüche 9 bis 12, wobei, falls eine CS-Sitzung aufgebaut werden soll, die Sitzung über einen Knoten mit der Funktionalität einer Mobilfunk-Vermittlungsstelle aufgebaut wird.

14. System gemäß einem der Ansprüche 9 bis 13, wobei, falls eine IMS-Sitzung aufgebaut werden soll, die Sitzung über einen Knoten mit der Funktionalität eines dienenden GPRS-Trägerknotens aufgebaut wird.

15. System gemäß einem der Ansprüche 9 bis 14, wobei das erste Endgerät (3) ein Voicemailaufzeichnungsserver oder ein Anrufweiterleitungsserver ist.

16. System gemäß einem der Ansprüche 9 bis 15, wobei das HLR oder der HSS (10) angepasst ist, um IMS-Dienstdaten des ersten Endgeräts (3) bereitzustellen.

## Revendications

1. Procédé d'établissement d'une session de télécommunications dans un réseau comportant un domaine de sous-système multimédia à protocole Internet, IP, soit domaine IMS, et un domaine commuté par circuits, soit domaine CS, entre un premier terminal (3) enregistré auprès du réseau et un second terminal, comportant les étapes suivantes :
la réception (A) au niveau du réseau d'un message d'accès initial, IAM, (100) depuis le second terminal dans le domaine CS (22) pour lancer une session avec le premier terminal (3) ;
**caractérisé en ce que** le procédé comporte :
la réception au niveau du réseau (B, BA) d'un message de réponse (104) depuis un enregistreur de position de rattachement, HLR, ou un serveur d'abonnés de rattachement, HSS, (10), le message de réponse (104) comportant des données indicatives de l'état d'enregistrement de l'IMS du premier terminal (3), les données étant mémorisées sur le HLR ou le HSS (10) ;
la détermination (C, CA) au niveau du réseau, en fonction dudit message de réponse, que le premier terminal (3) est disponible pour établir une session IMS ; et
l'établissement d'une session IMS ou d'une session CS entre le premier terminal (3) et le second terminal en fonction de la détermination.

2. Procédé selon la revendication 1, dans lequel, si le réseau détermine que le premier terminal (3) est disponible pour établir une session IMS et n'est pas disponible dans le domaine CS, la session est établie par le biais du domaine IMS.

3. Procédé selon l'une quelconque des revendications 1 et 2, dans lequel, si le réseau détermine que le premier terminal (3) n'est pas disponible dans le domaine IMS, la session est établie par le biais du domaine CS.

4. Procédé selon l'une quelconque des revendications précédentes, dans lequel le second terminal envoie l'IAM (100) au réseau par l'intermédiaire d'un réseau téléphonique commuté public, PSTN, (22).

5. Procédé selon l'une quelconque des revendications précédentes, dans lequel, si une session CS doit être établie, la session est établie sur un noeud ayant une fonctionnalité de centre de commutation de services mobiles.

6. Procédé selon l'une quelconque des revendications précédentes, dans lequel, si une session IMS doit être établie, la session est établie sur un noeud ayant une fonctionnalité de noeud de soutien de service radio par paquets général, GPRS, de desserte.

7. Procédé selon l'une quelconque des revendications précédentes, dans lequel le premier terminal (3) est un serveur d'enregistrement de courrier vocal ou un serveur de transfert d'appels.

8. Procédé selon l'une quelconque des revendications précédentes, dans lequel le HLR ou le HSS (10) est adapté pour fournir des données de service IMS du premier terminal (3).

9. Système d'établissement d'une session de télécommunications dans un réseau comportant un domaine de sous-système multimédia à protocole Internet, IP, soit domaine IMS, et un domaine commuté par circuits, soit domaine CS, entre un premier terminal (3) enregistré auprès du réseau et un second terminal, comprenant un composant de réseau (20) adapté pour recevoir un message d'accès initial, IAM, (100) depuis le second terminal dans le domaine CS (22) pour lancer une session avec le premier terminal (3) ;
le système comprenant en outre un enregistreur de position de rattachement, HLR, ou un serveur d'abonnés de rattachement, HSS, dans lequel sont mémorisées des données indicatives de l'état d'enregistrement IMS du premier terminal,
le système étant **caractérisé en ce que**
le HLR ou le HSS est adapté pour fournir un message de réponse au composant de réseau, le message de réponse comportant des données indicatives de l'état d'enregistrement de l'IMS du premier terminal,
le composant de réseau (20) étant adapté pour obtenir le message de réponse depuis le HLR ou le HSS et déterminer à partir dudit message de réponse que le premier terminal (3) est disponible pour établir une session IMS ; et le composant de réseau (20) étant exploitable pour établir une session IMS ou une session CS entre le premier terminal (3) et le second terminal en fonction de la détermination.

10. Système selon la revendication 9, dans lequel, si le réseau détermine que le premier terminal (3) est disponible pour établir une session IMS et n'est pas disponible dans le domaine CS, la session est établie par le biais du domaine IMS.

11. Système selon l'une quelconque des revendications 9 et 10, dans lequel, si le réseau détermine que le premier terminal (3) n'est pas disponible dans le domaine IMS, la session est établie par le biais du domaine CS.

12. Système selon l'une quelconque des revendications 9 à 11, dans lequel le second terminal envoie l'IAM (100) au réseau par l'intermédiaire d'un réseau téléphonique commuté public, PSTN, (22).

13. Système selon l'une quelconque des revendications 9 à 12, dans lequel, si une session CS doit être établie, la session est établie sur un noeud ayant une fonctionnalité de centre de commutation de services mobiles.

14. Système selon l'une quelconque des revendications 9 à 13, dans lequel, si une session IMS doit être établie, la session est établie sur un noeud ayant une fonctionnalité de noeud de soutien de service radio par paquet général, GPRS, de desserte.

15. Système selon l'une quelconque des revendications 9 à 14, dans lequel le premier terminal (3) est un serveur d'enregistrement de courrier vocal ou un serveur de transfert d'appels.

16. Système selon l'une quelconque des revendications 9 à 15, dans lequel le HLR ou le HSS (10) est adapté pour fournir des données de service IMS du premier terminal (3).
